# EUROPÄISCHE PATENTSCHRIFT

(11) **EP 3 171 135 B1**
(45) Veröffentlichungstag und Bekanntmachung des Hinweises auf die Patenterteilung: **14.08.2019**
(21) Anmeldenummer: 16189596.6
(22) Anmeldetag: 20.09.2016
(51) Int. Cl.: G01D 5/12, G01M 1/30, G01M 1/36, G01D 5/26, G01D 5/244, G01D 5/347, G01M 1/22

(54) **WINKELMESSEINRICHTUNG UND VERFAHREN ZUM BETREIBEN EINER WINKELMESSEINRICHTUNG**
ANGLE MEASURING DEVICE AND METHOD FOR OPERATING A POWER SUPPLY DEVICE
CLINOMÈTRE ET PROCÉDÉ DE FONCTIONNEMENT D'UN CLINOMÈTRE

(30) Priorität: 23.11.2015 DE 102015223061
(43) Veröffentlichungstag der Anmeldung: 24.05.2017
(73) Patentinhaber: Dr. Johannes Heidenhain GmbH, 83301 Traunreut (DE)
(72) Erfinder: JOACHIMSTHALER, Ingo, 83278 Traunstein (DE); GEISLER, Thomas, 83362 Surberg (DE)

(56) Entgegenhaltungen:
- EP-A1- 2 719 499
- EP-A1- 2 944 966
- DE-A1- 4 104 694
- DE-A1- 19 539 633
- DE-A1- 19 813 881
- DE-A1-102013 209 004
- DE-C2- 3 153 754

## Beschreibung

### GEBIET DER TECHNIK

Die vorliegende Erfindung betrifft eine Winkelmesseinrichtung, sowie ein Verfahren zum Betreiben einer Winkelmesseinrichtung. Insbesondere ist die Winkelmesseinrichtung geeignet ausgestattet, um Informationen betreffend eine Unwucht der von der Winkelmesseinrichtung gemessenen Welle zu generieren.

### STAND DER TECHNIK

Winkelmesseinrichtungen zum Erfassen der Winkelposition einer Welle sind auf dem Gebiet der Automatisierungstechnik und bei Werkzeugmaschinen weit verbreitet. Sie werden beispielsweise dafür eingesetzt, bei geregelten Antrieben Lageistwerte zu ermitteln, die eine Folgeelektronik, beispielsweise eine numerische Steuerung, benötigt, um Sollwerte für Regelkreise zu berechnen, mit denen der Antrieb (z.B. Vorschub eines Werkzeugs oder eines Werkstückes) kontrolliert wird. Zwischen der Messgerätewelle und der Maschinenwelle wird dabei eine mechanisch steife Verbindung hergestellt, so dass sich die Bewegung der Maschinenwelle direkt auf die Messgerätewelle überträgt. Winkelmesseinrichtungen enthalten zur Feststellung des Drehwinkels der zu messenden Welle eine Maßverkörperung, meist in Form einer Codescheibe, auf der eine Teilungsstruktur aufgebracht ist und deren Abtastung die Ermittlung der Winkelposition der Welle erlaubt. Hierbei kommen beispielsweise optische, magnetische oder auch induktive Abtastprinzipien zum Einsatz. Der Winkelmessung können inkrementale oder/und absolute Messprinzipien zugrunde liegen.

Heutzutage kommen vorzugsweise Winkelmesseinrichtungen zum Einsatz, die, unabhängig davon, ob das zugrundeliegende Messprinzip entweder absolut, oder inkremental, oder sowohl absolut, als auch inkremental ist, absolute Winkelwerte erzeugen, die über digitale, meist serielle Datenschnittstellen von der Positionsmesseinrichtung zur Folgeelektronik übertragen werden.

Besonders dann, wenn der Antrieb, von dem die Winkelposition einer Welle mittels einer Winkelmesseinrichtung gemessen werden soll, schwere Lasten bewegt, wie beispielsweise der Antrieb einer Rundtischachse in einer Werkzeugmaschine, oder wenn hohe Drehzahlen erforderlich sind, wie z.B. bei der Werkzeugspindel einer Werkzeugmaschine, ist es wichtig, dass die vom Antrieb bewegte Masse bezogen auf die Drehachse der Welle keine Unwucht aufweist.

Die WO 2009/156094, die DE 198 13 881 A1, DE 195 39 633 A1 und die DE 41 04 694 A1 beschreiben elektromechanische Auswuchtsysteme. Für die Bestimmung der Unwucht werden separate Sensoren für die Erfassung der Drehzahl und der von der Unwucht verursachten Schwingungen benötigt. Die Auswertung der Sensorsignale erfolgt dezentral.

Die EP 2 719 499 A1, befasst sich ebenfalls mit der Unwuchtbestimmung in Maschinen. Sie schlägt vor, eine Unwuchtmesseinheit an einem stationären oder einem linear verschiebbaren Lagergestell der Maschine anzuordnen.

Die EP 2 944 966 A1 beschreibt einen Vibrationssensor, der auf der Messung der Position eines beweglich gelagerten Masseblocks basiert.

Die DE 31 53 754 C2 schlägt ein Verfahren zur Überprüfung einer Radauswuchtvorrichtung basierend auf Winkelmessungen vor. Auch hier ist die Unwuchtbestimmung unabhängig von der Winkelmessung.

Die DE 10 2013 209004 A1 befasst sich mit der Auswuchtung eine Welle. Es kommen mehrere Sensoren zum Einsatz, die an verschiedenen Stellen der Anlage angeordnet sind.

### ZUSAMMENFASSUNG DER ERFINDUNG

Es ist Aufgabe der vorliegenden Erfindung, eine Vorrichtung zu schaffen, die auf einfache Weise eine Information über die Unwucht einer Welle, bzw. eines von einer Welle angetriebenen Maschinenteils erzeugt.

Diese Aufgabe wird gelöst durch eine Winkelmesseinrichtung nach Anspruch 1. Vorteilhafte Details einer derartigen Winkelmesseinrichtung ergeben sich aus den von Anspruch 1 abhängigen Ansprüchen.

Es wird nun eine Winkelmesseinrichtung vorgeschlagen, umfassend
- ein Gehäuse,
- eine Positionserfassungseinheit zur Erzeugung von Winkelwerten, die die Winkelstellung einer Welle bezogen auf eine Referenzposition angeben,
- eine Schnittstelleneinheit zur Kommunikation mit einer Folgeelektronik über einen Datenübertragungskanal,
wobei die Winkelmesseinrichtung weiter umfasst:
- wenigstens einen Unwuchtsensor, der aus unwuchtbedingten Auslenkungen der Welle ein Unwuchtsignal generiert,
- eine Unwuchtauswerteeinheit, die aus dem Unwuchtsignal Unwuchtwerte generiert, sowie
- eine Signalverarbeitungseinheit, die aus den Winkelwerten und den Unwuchtwerten eine Unwuchtinformation generiert, die über die Schnittstelleneinheit zur Folgeelektronik übertragbar ist.

Weiter liegt der vorliegenden Erfindung die Aufgabe zugrunde, ein Verfahren anzugeben, mit dem auf einfache Weise eine Information über die Unwucht einer Welle, bzw. eines von einer Welle angetriebenen Maschinenteils erzeugt werden kann.

Diese Aufgabe wird gelöst durch ein Verfahren zum Betreiben einer erfindungsgemäßen Winkelmesseinrichtung nach Anspruch 9. Vorteilhafte Details eines derartigen Verfahrens ergeben sich aus den von Anspruch 9 abhängigen Ansprüchen.

Hier wird ein Verfahren zum Betreiben einer erfindungsgemäßen Winkelmesseinrichtung beansprucht, wobei
- von der Positionserfassungseinheit Winkelwerte generiert werden, die die Winkelposition der Welle bezogen auf eine Referenzposition angeben,
- von der Unwuchterfassungseinheit aus einem von dem wenigstens einen Unwuchtsensor erzeugen Unwuchtsignal Unwuchtwerte generiert werden, die ein Maß für eine unwuchtbedingte Auslenkung der Welle sind und
- die Winkelwerte und die Unwuchtwerte der Signalverarbeitungseinheit zugeführt werden, die basierend auf den Winkelwerten und den Unwuchtwerten die Unwuchtinformation generiert, die wenigstens die Phasenlage des Unwuchtsignals bezogen auf die Referenzposition, sowie die Amplitude des Unwuchtsignals umfasst.

Es wird also eine Winkelmesseinrichtung, die in der Regel zur Messung der Winkelposition einer Welle sowieso bereits zur Verfügung steht, dazu ertüchtigt, eine Unwuchtinformation zu generieren. Die Winkelmesseinrichtung bildet somit ein in sich geschlossenes System zur Bestimmung der Unwucht.

Weitere Vorteile, sowie Einzelheiten der vorliegenden Erfindung ergeben sich aus der nachfolgenden Beschreibung anhand der Zeichnungen.

### KURZE BESCHREIBUNG DER ZEICHNUNGEN

Es zeigt
- Figur 1a: einen mechanischen Aufbau einer erfindungsgemäßen Winkelmesseinrichtung,
- Figur 1b: den mechanischen Aufbau einer alternativen Ausführungsform einer erfindungsgemäßen Winkelmesseinrichtung,
- Figur 2: ein Blockschaltbild einer erfindungsgemäßen Winkelmesseinrichtung,
- Figur 3: ein Signaldiagramm bei zeitgesteuerter Erzeugung von Unwuchtwerten,
- Figur 4: ein Signaldiagramm bei positionsgesteuerter Erzeugung von Unwuchtwerten,
- Figur 5: ein Blockdiagramm einer ersten Ausführungsform einer Signalverarbeitungseinheit zur Erzeugung einer Unwuchtinformation und
- Figur 6: ein Blockdiagramm einer weiteren Ausführungsform einer Signalverarbeitungseinheit zur Erzeugung einer Unwuchtinformation.

### BESCHREIBUNG DER AUSFÜHRUNGSFORMEN

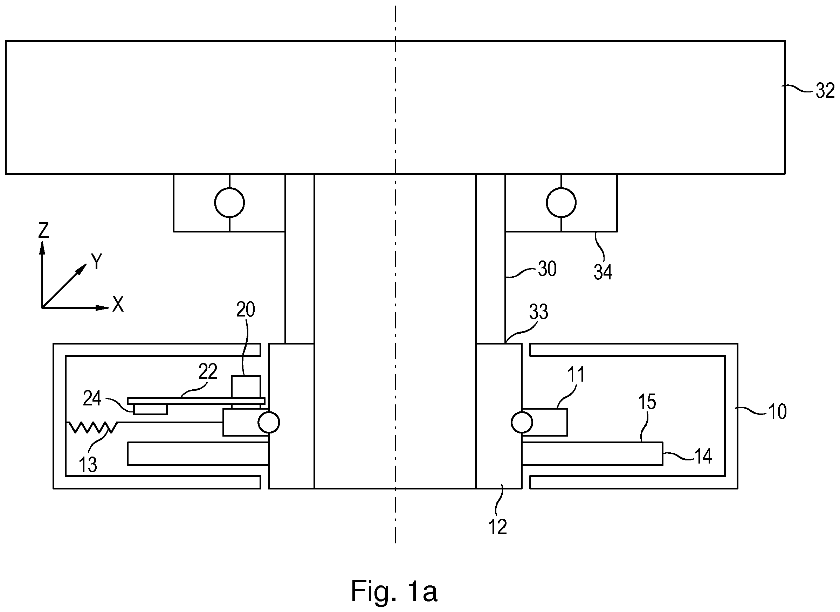

Figur 1a zeigt den mechanischen Aufbau einer erfindungsgemäßen Winkelmesseinrichtung, die an eine Welle 30 einer Maschine angebaut ist. In diesem Ausführungsbeispiel ist die Maschine ein Rundtisch 32 einer Werkzeugmaschine. Allgemein sind erfindungsgemäße Winkelmesseinrichtungen aber immer dann einsetzbar, wenn in einer Maschine die Unwucht einer Welle, bzw. eines von der Welle angetriebenen Maschinenteils, erfasst und quantifiziert werden soll.

Weitere Beispiele, wo erfindungsgemäße Winkelmesseinrichtungen eingesetzt werden können, sind Schleifmaschinen, Drehmaschinen und Spindeln von Werkzeugmaschinen.

Die Welle 30 des Rundtisches 32 ist gegenüber einem (nicht dargestellten) Maschinenbett mittels eines Lastlagers 34 drehbar gelagert. Jede asymmetrische Belastung des Rundtisches 32 führt zu einer Unwucht, die kleine Auslenkungen des mit der Welle 30 rotierenden Teils des Lastlagers 34 (und damit auch der Welle 30 selbst) gegenüber dem stationären, mit dem Maschinenbett verbundenen Teils des Lastlagers 34 bewirkt.

Die Winkelmesseinrichtung weist ein Gehäuse 10 auf, das am Maschinenbett befestigt ist. Eine Welle 12 der Winkelmesseinrichtung ist im Gehäuse 10 über ein Lager 11 drehbar gelagert und mit der Welle 30 des Rundtisches 32 mechanisch steif verbunden. Hierfür sind geeignete Verbindungsmittel 33 vorgesehen. So kann die Verbindung beispielsweise durch Verschrauben hergestellt werden. Ebenso kann ein Kupplungselement vorgesehen sein, das eine ausreichend steife Verbindung ermöglicht, um Auslenkungen der Welle 30 auch auf die Welle 12 zu übertragen. Die Welle 12 bildet somit quasi eine Verlängerung der Welle 30.

Der gegenüber der Welle 12 stationäre Teil des Lagers 11 ist über eine (lediglich symbolisch dargestellte) Kupplung 13 in axialer und radialer Richtung mechanisch weich mit dem Gehäuse 10 verbunden. Die Kupplung 13 kann hierfür Feder- und/oder Dämpfungselemente umfassen. Die mechanisch weiche Verbindung erlaubt eine unwuchtbedingte Auslenkung des Lagers 11 gegenüber dem Gehäuse 10. In Torsionsrichtung ist die Kupplung 13 dagegen steif ausgeführt, so dass ein präzise Winkelmessung ermöglicht wird.

Eine Maßverkörperung 14 mit einer radial um die gemeinsame Drehachse der Wellen 12, 30 angeordneten Messteilung 15 ist wiederum drehfest mit der Welle 12 verbunden, so dass eine Drehung des Rundtisches 32, bzw. dessen Welle 30, eine Drehung der Maßverkörperung 14 bewirkt.

In einer alternativen Ausführungsform könnte die Maßverkörperung 14 auch drehfest direkt mit der Welle 30 der Maschine verbunden sein. Die Welle 12, das Lager 11, sowie die Verbindungsmittel 33 der Winkelmesseinrichtung könnten dann entfallen.

Die Messteilung 15 umfasst eine oder mehrere Teilungsspuren, die je nach Funktionsprinzip der Winkelmesseinrichtung inkremental oder/und absolut codiert ausgeführt sind.

Inkrementale Teilungsspuren bestehen aus einer regelmäßigen Abfolge von Codeelementen, aus deren Abtastung periodische, meist weitgehend sinusförmige Positionssignale resultieren. Die Positionsbestimmung erfolgt durch Zählen von Signalperioden und Bruchteilen von Signalperioden (Interpolation) und ist daher grundsätzlich relativ. Um einen absoluten Bezug herstellen zu können, ist meist eine Referenzmarke vorgesehen. Diese kann auf einer separaten Teilungsspur angeordnet oder in der inkrementalen Teilungsspur integriert sein. Ein Überfahren der Referenzmarke erlaubt die Zuordnung eines tatsächlichen Winkelwerts.

Absolut codierte Teilungsspuren können parallel (z.B. Gray-Code) oder seriell (z.B. Kettencode, Pseudo-Random-Code) codiert sein. Aus ihrer Abtastung resultieren Positionssignale, die unmittelbar eine absolute Winkelposition enthalten.

Da inkrementale Teilungsspuren eine höhere Winkelauflösung erlauben als absolute, sind in Winkelmesseinrichtungen häufig sowohl inkrementale, aus auch absolut codierte Teilungsspuren vorhanden. Hier wird die Absolutposition aus der Abtastung der absolut codierten Teilungsspur gewonnen (Grobposition) und die Auflösung des Winkelwerts durch die Abtastung der inkrementalen Teilungsspur erhöht (Feinposition). Auf eine Referenzmarke kann bei derartigen Anordnungen verzichtet werden.

Das physikalische Abtastprinzip, das der Winkelmesseinrichtung zugrunde liegt, ist für die vorliegende Erfindung bedeutungslos. So kann beispielsweise ein optisches, magnetisches, kapazitives oder induktives Abtastprinzip zum Einsatz kommen.

Erfindungsgemäß ist im Gehäuse 10 der Winkelmesseinrichtung wenigstens ein Unwuchtsensor 20 angeordnet, mit dem unwuchtbedingte Auslenkungen der Welle 12 der Winkelmesseinrichtung und somit der Welle 30 des Rundtisches 32 messbar sind. Er kann beispielsweise als Beschleunigungssensor ausgeführt sein, der Auslenkungen der Welle 12 in einer Messrichtung X erfasst.

Insbesondere dann, wenn mit dem Rundtisch große Massen bewegt werden, ist die Anordnung des Unwuchtsensors 20 unkritisch, da bei sich drehender Welle 30 alle Komponenten des Systems bedingt durch die Unwucht zum Schwingen angeregt werden.

Besonders vorteilhaft ist es jedoch, wenn der Unwuchtsensor 20 mechanisch steif mit dem stationären Teil des Lagers 11 verbunden ist, da hier die größte Auslenkung zu erwarten ist. Im dargestellten Beispiel ist der Unwuchtsensor 20 auf einer Leiterplatte 22 angeordnet, die wiederum direkt am stationären Teil des Lagers 11 befestigt ist. Somit ist der Unwuchtsensor 20 über die Leiterplatte 22 und das Lager 11 in radialer Richtung mechanisch steif an die Welle 12 gekoppelt. Auslenkungen der Welle 12 bewirken also direkt auch Auslenkungen des Unwuchtsensors 20.

Besonders vorteilhaft ist es, wenn zwei Unwuchtsensoren 20 vorgesehen sind, deren Messrichtungen X, Y orthogonal zueinander in der Rotationsebene der Maßverkörperung 14 angeordnet sind. In diesem Fall erhält man zwei zueinander um 90° phasenverschobene, weitgehend sinusförmige Unwuchtsignale, die in bekannter Weise als Real- und Imaginärteil einer komplexen Funktion betrachtet werden können und die besonders einfach durch Interpolatorschaltungen, die bei der Auswertung von Positionssignalen von inkrementalen Positionsmesseinrichtungen zum Einsatz kommen, nach Betrag und Phasenwinkel ausgewertet werden können.

Soll zusätzlich ein durch die Unwucht verursachter Taumel der Welle 12 detektiert werden, kann ein weiterer Unwuchtsensor 20 vorgesehen werden, der Auslenkungen in einer Messrichtung Z senkrecht zur Rotationsebene und somit parallel zur Drehachse der Welle 12 misst.

Bei den Unwuchtsensoren 20 kann es sich um einzelne Bauteile handeln, die auf der Leiterplatte 22 angeordnet sind. Besonders vorteilhaft ist es jedoch, wenn wenigstens zwei Unwuchtsensoren 20 zur Erfassung der Unwucht in den erforderlichen Messrichtungen X, Y, Z in einem Bauteil enthalten sind.

Aus fertigungstechnischer Sicht ergibt sich ein besonders einfacher Aufbau, wenn die Unwuchtsensoren 20 in SMD-Technik ausgeführt sind.

Auf der Leiterplatte 22 können, ganz oder teilweise, Komponenten der elektrischen Schaltung der Winkelmesseinrichtung angeordnet sein, beispielsweise Komponenten zur Signalverarbeitung (digital oder/und analog), sowie zur Signal-/Datenübertragung zu einer Folgeelektronik. Darüber hinaus kann auf der Leiterplatte 22, ganz oder teilweise, eine Abtasteinheit 24 zur Erzeugung von Positionssignalen durch Abtastung der Messteilung 15 angeordnet sein.

Alternativ könnte die Leiterplatte 22 auch am Gehäuse 10 befestigt und lediglich der wenigstens eine Unwuchtsensor 20 mit dem stationären Teil des Lagers 11 verbunden sein. Für den Anschluss des Unwuchtsensors 20 an der Leiterplatte 22 wäre dann ein Kabel vorzusehen. Die dargestellte Ausführungsform ist aus Sicht der Fertigungstechnik gerade deshalb besonders vorteilhaft, da der Verkabelungsaufwand innerhalb des Gehäuses 10 minimiert wird.

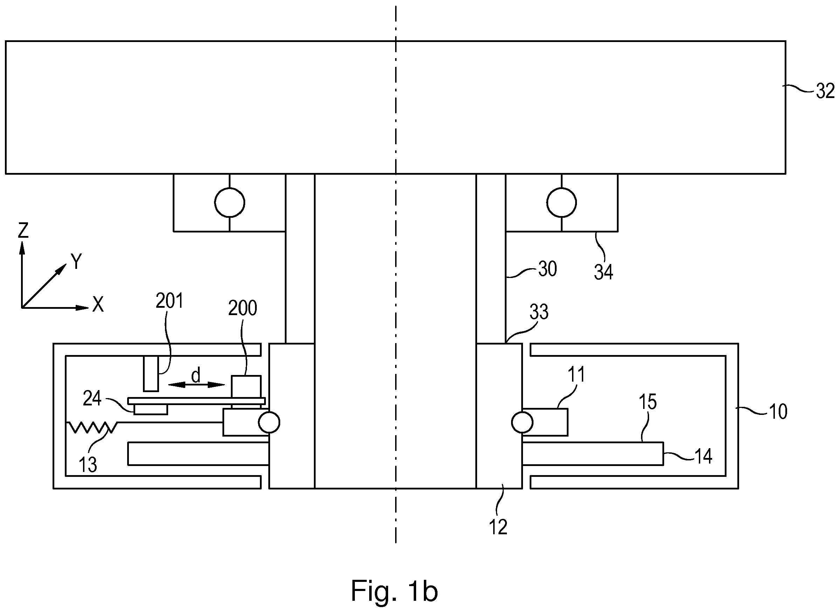

Figur 1b zeigt den mechanischen Aufbau einer alternativen Ausführungsform einer erfindungsgemäßen Winkelmesseinrichtung. Bereits in Verbindung mit Figur 1a beschriebene Komponenten tragen das gleiche Bezugszeichen.

In diesem Beispiel ist der Unwuchtsensor 200 ein Wegsensor 200, mit dem ein Abstand d zwischen je einer Bezugsposition, die dem Gehäuse 10 der Winkelmesseinrichtung und einer Bezugsposition, die der Welle 12 zuzuordnen ist, messbar ist. Im dargestellten Beispiel misst der Wegsensor 200, der auf der Leiterplatte 22 angeordnet ist, den Abstand d zu einer Bezugsfläche 201 am Gehäuse 10. Alternativ könnte der Wegsensor auch mit dem Gehäuse 10 verbunden sein und einen Abstand d direkt zur Welle 12, oder zur Maßverkörperung 14 messen. Geeignete Oberflächen können in diesem Fall die Bezugsfläche bilden.

Die Abstandsmessung im Wegsensor 200 kann auf beliebigen Messprinzipien basieren, beispielsweise auf optischen, magnetischen, kapazitiven oder induktiven.

Da die Kupplung 13 eine Auslenkung der Welle 12 bezogen auf das Gehäuse 10 erlaubt, ist der Verlauf des Abstands d ein Maß für die Unwucht. Analog zu den Unwuchtsignalen eines Beschleunigungssensors zeigt auch der Abstand d einen weitgehend sinusförmigen Verlauf und weist eine Periodendauer auf, die einer Umdrehung der Welle 12 entspricht.

Auch für dieses Ausführungsbeispiel gilt, dass es besonders vorteilhaft ist, zwei Wegsensoren 200 für die Messrichtungen X, Y, oder sogar drei Wegsensoren 200 für die Messrichtungen X, Y, Z vorzusehen.

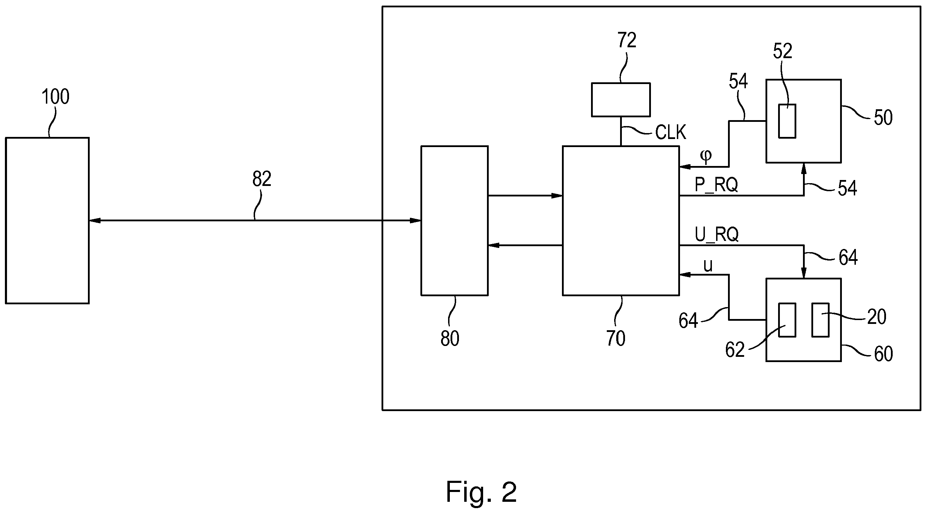

Figur 2 zeigt nun ein Blockschaltbild einer erfindungsgemäßen Winkelmesseinrichtung. Zentrale Funktionseinheiten der Winkelmesseinrichtung sind eine Positionserfassungseinheit 50, eine Unwuchterfassungseinheit 60, eine Signalverarbeitungseinheit 70, sowie eine Schnittstelleneinheit 80.

Die Positionserfassungseinheit 50 ist geeignet ausgestaltet um digitale Winkelwerte ϕ zu erzeugen, die die Winkelstellung der Welle 12 und somit auch der Welle 30 bezogen auf eine Referenzposition angeben. Hierzu sind ihr die Maßverkörperung 14 mit der Messteilung 15 und die Abtasteinheit 24 für deren Abtastung zugeordnet. Weiter umfasst die Positionserfassungseinheit 50 eine Positionsauswerteeinheit 52 zur Bildung des digitalen Winkelwerts ϕ aus den Abtastsignalen der Abtasteinheit 24.

Entsprechend den notwendigen Verarbeitungsschritten, die erforderlich sind, um die Abtastsignale der Abtasteinheit 24 zu Winkelwerten ϕ zu verarbeiten, umfasst die Positionsauswerteeinheit 52 verschiedene Funktionseinheiten, die Verarbeitungsschritte wie Verstärkung, Signalkorrektur (Offset-, Amplituden-, Phasenkorrektur), Interpolation, Zählung von Teilungsperioden, A/D-Wandlung,... ausführen.

Im Rahmen dieser Erfindung können Winkelwerte ϕ einen reinen Absolutwert umfassen, der die Winkelstellung mit einer maximalen Auflösung der Winkelmesseinrichtung angibt. Zusätzlich können parallel zum Absolutwert noch Zählsignale, die aus der Abtastung einer Inkrementalteilung resultieren, als Teil des Winkelwerts ϕ übertragen werden. Bei den Zählsignalen handelt es sich üblicherweise um zwei um 90° phasenverschobene Rechtecksignale. Als weitere Alternative ist es denkbar, als Winkelwert ϕ einen Absolutwert der Winkelmessung zu übertragen, der aus der Abtastung einer absolut codierten Teilungsspur resultiert (Grobposition), sowie Zählsignale, die aus der Abtastung einer Inkrementalteilung resultieren und die zur Erzeugung der Feinposition, beispielsweise mit einem Zähler, dienen können.

Die Erzeugung der Winkelwerte ϕ in der Positionserfassungseinheit 50 kann kontinuierlich oder nur auf Anforderung von der Signalverarbeitungseinheit 70 erfolgen. Auch Mischformen sind möglich, so dass beispielsweise Absolutwerte nur auf Anforderung erzeugt werden, Zählsignale aber kontinuierlich übertragen werden. Für die Übertragung entsprechender Steuersignale, insbesondere eines Positionsanforderungsbefehls P_RQ, zur Positionserfassungseinheit 50, sowie der Winkelwerte ϕ zur Signalverarbeitungseinheit 70 sind Signalleitungen 54 vorgesehen.

Die Unwuchterfassungseinheit 60 dient dazu, diskrete Unwuchtwerte u zu generieren, die Momentanwerten des Unwuchtsignals entsprechen, das der wenigstens eine Unwuchtsensor 20 erzeugt und das ein Maß für die unwuchtbedingte Auslenkung der Wellen 12, 30 ist. Sie umfasst den wenigstens einen Unwuchtsensor 20, sowie eine Unwuchtauswerteeinheit 62.

Der Unwuchtsensor 20 erzeugt bei Drehung der Welle 12 der Winkelmesseinrichtung (und damit der Welle 30 des Rundtisches 32) ein von der Unwucht der Wellen 12, 30, insbesondere der von der Welle 30 bewegten Masse, abhängiges Unwuchtsignal. Dieses ist bei konstanter Drehzahl der Welle 12 weitgehend sinusförmig, wobei eine Umdrehung der Wellen 12 einer Signalperiode des Unwuchtsignals entspricht.

Das Unwuchtsignal ist der Unwuchtauswerteeinheit 62 zugeführt, in der aus dem analogen Unwuchtsignal digitale Unwuchtwerte u generierbar sind. Die Unwuchtauswerteeinheit 62 kann hierzu ein Tiefpassfilter zum Begrenzen der Bandbreite des Unwuchtsignals und zum Herausfiltern von hochfrequenten Signalanteilen, die dem reinen Unwuchtsignal überlagert sind, sowie einen Analog-Digital-Konverter zum Digitalisieren des analogen Signals umfassen. Vorzugsweise kommt hier ein Sigma-Delta-Konverter zum Einsatz.

Für die Übertragung von Steuersignalen an die Unwuchterfassungseinheit 60, insbesondere eines Unwuchtanforderungsbefehls U_RQ, um das Generieren von Unwuchtwerten zu initiieren und um Unwuchtwerte u zur Signalverarbeitungseinheit 70 zu übertragen, sind geeignete Signalleitungen 64 vorgesehen.

Das Erzeugen der Unwuchtwerte kann zeitgesteuert oder positionsgesteuert erfolgen.

In der Signalverarbeitungseinheit 70 werden die Winkelwerte ϕ und die Unwuchtwerte u zu einer Unwuchtinformation I weiter verarbeitet, die das Auswuchten der Vorrichtung, an der die Winkelmesseinrichtung betrieben wird, ermöglicht. Im Rahmen dieser Erfindung umfasst die Unwuchtinformation I wenigstens eine Information über die Phasenlage des Unwuchtsignals bezogen auf die Winkelstellung der zu messenden Welle 30, sowie die Amplitude des Unwuchtsignals. Da die Amplitude des Unwuchtsignals eine Abhängigkeit von der Drehzahl der Welle aufweist, kann die Unwuchtinformation I auch die Drehzahl der Welle umfassen. Dies gilt insbesondere dann, wenn für die Ermittlung der Unwuchtinformation keine definierte Drehzahl vorgegeben ist.

Um die Abläufe in der Winkelmesseinrichtung synchronisieren und in einem exakten zeitlichen Raster ablaufen lassen zu können, ist in der Winkelmesseinrichtung ein Taktgenerator 72 vorgesehen, der ein Arbeitstaktsignal CLK erzeugt, das als Zeitbasis dient. Dementsprechend kann das Arbeitstaktsignal CLK der Positionserfassungseinheit 50, der Unwuchterfassungseinheit 60, der Signalverarbeitungseinheit 70 und der Schnittstelleneinheit 80 zugeführt sein.

Die Schnittstelleneinheit 80 ermöglicht eine Kommunikation mit einer Folgeelektronik 100. Insbesondere empfängt die Schnittstelleneinheit 80 Befehle und ggf. Daten von der Folgeelektronik 100 und überträgt Ausgabedaten zur Folgeelektronik 100. Zu den Ausgabedaten zählen neben der Unwuchtinformation I beispielsweise auch Winkelwerte ϕ, die mittels eines Positionsanforderungsbefehls von der Folgeelektronik 100 angefordert werden. Bevorzugt ist die Schnittstelleneinheit 80 geeignet zur seriellen Datenübertragung, wobei die Datenübertragung je nachdem, welches physikalische Übertragungsprinzip gewählt wird, über herkömmliche elektrische Leitungen, Lichtwellenleiter oder auch drahtlos erfolgen kann.

Die physikalische Verbindung zwischen der Schnittstelleneinheit 80 und einer korrespondierenden Schnittstelleneinheit (nicht dargestellt) der Folgeelektronik 100 wird über einen Datenübertragungskanal 82 hergestellt. Der Datenübertragungskanal 82 umfasst alle Komponenten, die benötigt werden, um einen Datenaustausch zwischen der Schnittstelleneinheit 80 der Winkelmesseinrichtung und der Schnittstelleneinheit der Folgeelektronik 100 zu ermöglichen, wie z.B. Signalwandlerbausteine, Datenempfänger-/sender, Leitungen (elektrisch, optisch,...), Steckverbinder, etc.

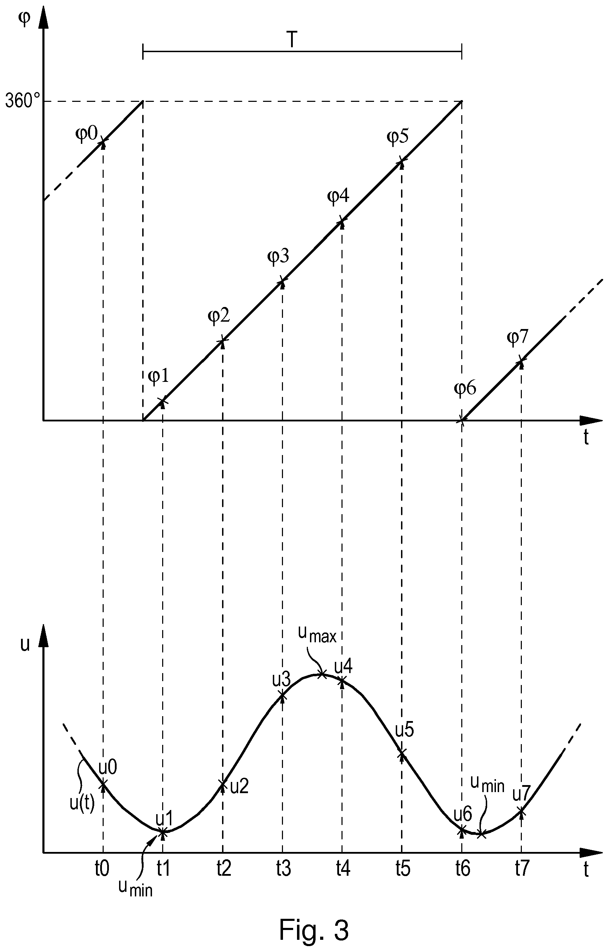

Figur 3 zeigt ein Signaldiagramm bei zeitgesteuerter Erzeugung von Unwuchtwerten. Im oberen Teil ist der Verlauf des Drehwinkels der Wellen 12, 30 bei konstanter Drehzahl dargestellt. Ausgehend von einer Referenzposition, der der Winkelwert 0° zugeordnet ist, steigt der Winkelwert ϕ innerhalb einer Periodendauer T, die der Zeitdauer entspricht, die die Welle 30 für eine Umdrehung benötigt, linear von 0° bis 360° an und springt dann wieder auf 0° zurück. Der dargestellte Sprung ergibt sich lediglich aus der gewählten Darstellung und ist kein Sprung im mathematischen Sinn. Tatsächlich folgen die Winkelwerte ϕ einer stetigen Funktion.

Der untere Teil von Figur 3 zeigt den Verlauf des Unwuchtsignals, das vom Unwuchtsensor 20 erfasst wird. Das Unwuchtsignal u(t) ist bei konstanter Drehzahl weitgehend sinusförmig und weist ebenfalls die Periodendauer T auf, die der Zeit für eine Umdrehung der Welle 30 entspricht. Die gewählte Darstellung dient lediglich dem Verständnis und zeigt einen idealisierten Verlauf des Unwuchtsignals u(t). Tatsächlich sind in der Praxis dem Unwuchtsignal u(t) meist Störungen überlagert, die aus Vibrationen bzw. Beschleunigungen resultieren, die andere Ursachen haben, als die Unwucht der Welle 30.

Die Signalverarbeitungseinheit 70 initiiert nun in regelmäßigen Zeitabständen die Erzeugung von Unwuchtwerten u und, sofern sie nicht kontinuierlich erzeugt werden, auch von Winkelwerten ϕ. Unwuchtwerte u und Winkelwerte ϕ werden für die weitere Verarbeitung gespeichert. Die Zeitabstände werden durch eine Abtastrate (Abtastfrequenz) bestimmt, die nach dem Nyquist-Shannon-Abtasttheorem mehr als doppelt so hoch sein muss wie die höchste zu erfassende Frequenz des abzutastenden Signals, um in der weiteren Signalverarbeitung das ursprüngliche Signal aus den diskreten Werten wieder herstellen zu können. Im vorliegenden Fall weist das Unwuchtsignal u(t) die Drehfrequenz der Welle 30 auf. Unter der Voraussetzung, dass die Bandbreite des Unwuchtsignals u(t) auf die maximal zu erwartende Drehfrequenz der Welle 30, beispielsweise durch den Einsatz eines Tiefpassfilters, begrenzt ist, bedeutet das, dass die Abtastrate mehr als das doppelte der Drehfrequenz der Welle 30 betragen muss, um das Unwuchtsignal u(t) aus den diskreten Unwuchtwerten u rekonstruieren zu können. In der Praxis wird jedoch anstatt der niedrigsten theoretisch möglichen Abtastrate üblicherweise eine wesentlich höhere Abtastrate gewählt, um bei der höchsten zu erfassenden Drehzahl der zu messenden Welle 30 je Umdrehung ausreichend viele Werte für die weitere Signalverarbeitung zur Verfügung zu haben, insbesondere um eine hohe Rausch- und Störunterdrückung erreichen zu können. Dabei ist es zweckmäßig, wenn auch nicht unbedingt notwendig, Unwuchtwerte u und Winkelwerte ϕ jeweils gleichzeitig zu erfassen und für die weitere Verarbeitung zu speichern.

Im Beispiel von Figur 3 werden zu Zeitpunkten t0 bis t7 Unwuchtwerte u0 bis u7, sowie Winkelwerte ϕ0 bis ϕ7 erzeugt, bzw. erfasst. Allgemein betrachtet bedeutet das, dass jeweils zu Zeitpunkten ti Unwuchtwerte ui und Winkelwerte ϕi erfasst werden. Damit stehen der Signalverarbeitungseinheit 70 Wertepaare zur Verfügung, auf deren Grundlage die Unwuchtinformation I ermittelt werden kann. Insbesondere kann die Phasenlage des Unwuchtsignals u(t) bezogen auf einen Referenzpunkt der Winkelmessung und somit die Winkelwerte, an denen das Unwuchtsignal u(t) ein Maximum umax und/oder ein Minimum umin aufweist, bestimmt werden, sowie die Amplitude des Unwuchtsignals u(t). Die Unwuchtinformation I ist wiederum mit Hilfe der Schnittstelleneinheit 80 und den Datenübertragungskanal 82 zur Folgeelektronik 100 übertragbar und kann dort beispielsweise zum Auswuchten des Rundtisches 32 verwendet werden.

Um zu verhindern, dass bei niedrigen Drehzahlen zu viele Unwuchtwerte ui je Umdrehung der Welle 12 erzeugt werden, kann vorgesehen sein, die Abtastrate drehzahlabhängig anzupassen.

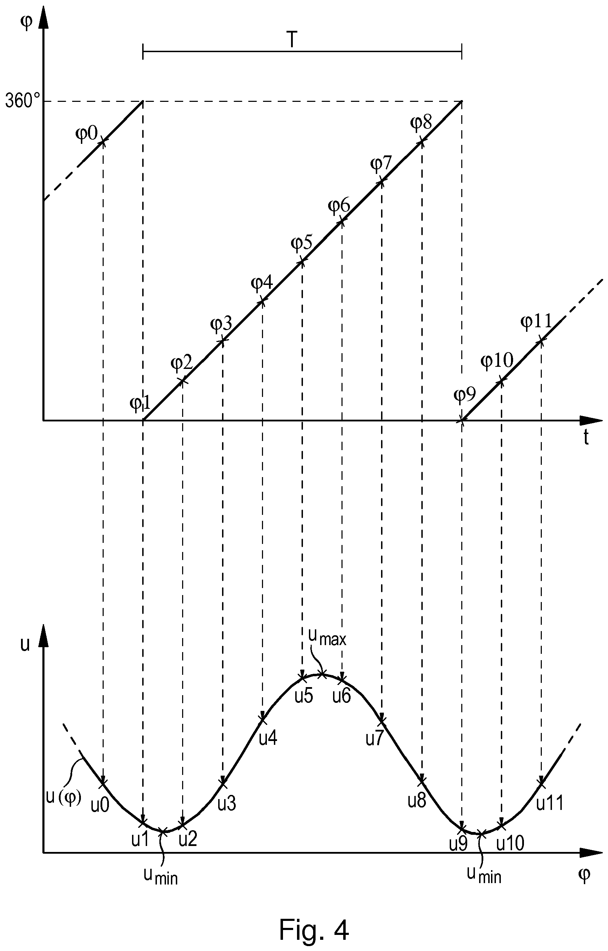

Figur 4 zeigt ein Signaldiagramm bei positionsgesteuerter Erzeugung von Unwuchtwerten u. Im oberen Teil ist wieder der Verlauf des Drehwinkels der Wellen 12, 30 bei konstanter Drehzahl dargestellt, der untere Teil zeigt den Verlauf des Unwuchtsignals, das vom Unwuchtsensor 20 erfasst wird, in Abhängigkeit vom Winkelwert ϕ.

Die Signalverarbeitungseinheit 70 initiiert nun die Erzeugung von Unwuchtwerten zu definierten Winkelpositionen der Welle 30. Im dargestellten Beispiel werden Unwuchtwerte u0 bis u11 bei Winkelwerten von ϕ0 bis ϕ11 (allgemein betrachtet Unwuchtwerte ui bei Winkelwerten ϕi) erzeugt, wobei der Winkelabstand zweiter aufeinanderfolgender Winkelwerte 45° beträgt. Um die Winkelwerte ϕi, an denen Unwuchtwerte ui erzeugt werden sollen, möglichst genau erfassen zu können, gibt es mehrere vorteilhafte Vorgehensweisen:
- Die Positionserfassungseinheit 50 erzeugt, entweder eigengesteuert oder auf Anforderung von der Signalverarbeitungseinheit 70, in kurzen Zeitabständen aktuelle Winkelwerte ϕ und gibt diese an die Signalverarbeitungseinheit 70 aus. Diese ermittelt aus zwei oder mehr aufeinanderfolgenden Winkelwerten ϕ, beispielsweise durch Extrapolation, die Zeitpunkte, an denen ein Winkelwert ϕi erreicht wird, an dem ein Unwuchtwert ui generiert werden soll und initiiert zu diesen Zeitpunkten die Erzeugung des Unwuchtwerts ui.
- Die Positionserfassungseinheit 50 erzeugt kontinuierlich aktuelle Winkelwerte ϕ und gibt den jeweils aktuellen Winkelwert ϕ an die Signalverarbeitungseinheit 70 aus. Diese initiiert bei definierten Bitwechseln der Winkelwerte ϕ die Generierung von Unwuchtwerten ui. Mit Vorteil sind hier Bitwechsel (also das Ändern des Wertes eines Bits von 1 nach 0, oder von 0 nach 1) einzelner Bits der Winkelwerte ϕ zu wählen, da sich hier automatisch eine gleichmäßige Verteilung der Unwuchtwerte ui über eine Umdrehung der Welle 12 ergibt.
- Werden Zählsignale als Teil der Winkelwerte ϕ übertragen, so können diese (beispielsweise durch die Verarbeitung von Signalflanken) verwendet werden, um die Generierung von Unwuchtwerten ui zu initiieren. Um die Anzahl der Unwuchtwerte ui zu reduzieren, können die Zählsignale mittels eines Zählers gezählt und nur bei jedem n-ten Bitwechsel ein Unwuchtwert ui generiert werden. Auch hier ist es vorteilhaft, nur ein einzelnes Bit des Zählerausgangs zu verwenden.

Bei diesem Verfahren sind die Unwuchtwerte ui nicht zeit-, sondern drehwinkelabhängig. Aus diesem Grund kann das Unwuchtsignal auch als Funktion des Drehwinkels ϕ der Welle 12 dargestellt werden und weist genau eine Signalperiode je Umdrehung der Welle 12 auf.

Die positionsgesteuerte Erzeugung von Unwuchtwerten ist besonders vorteilhaft, weil, unabhängig von der Drehzahl, bzw. einer Beschleunigung, in jeder Umdrehung der Welle 30 die gleiche Anzahl von Unwuchtwerten erzeugt wird. Durch die festgelegte Zuordnung Winkelwert - Unwuchtwert ist auch die Phaseninformation der Unwuchtinformation I bereits den Unwuchtwerten entnehmbar.

Unabhängig davon, ob die Erzeugung der Unwuchtwerte zeitgesteuert oder positionsgesteuert erfolgt, stehen der Signalverarbeitungseinheit 70 Folgen von Winkel- und Unwuchtwerten zum Generieren der Unwuchtinformation I durch digitale Signalverarbeitungsverfahren zur Verfügung.

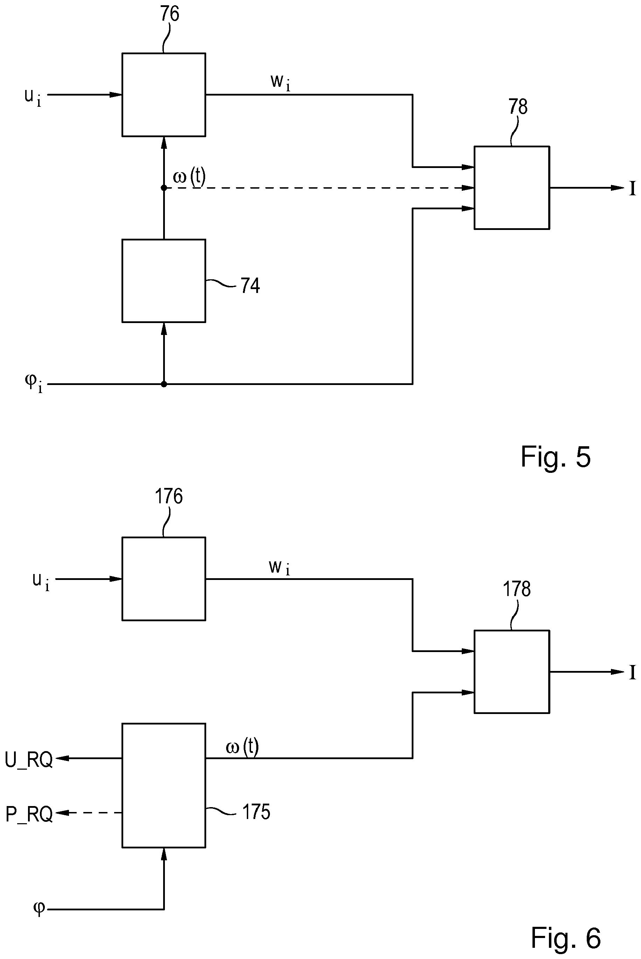

Figur 5 zeigt ein Blockschaltbild einer Signalverarbeitungseinheit 70 zur Bildung der Unwuchtinformation I aus Folgen von Winkelwerten ϕi und Unwuchtwerten ui, die ihr von der Positionserfassungseinheit 50 und der Unwuchterfassungseinheit 60 zeitgesteuert zugeführt werden. Sie umfasst eine Drehzahlbestimmungseinheit 74, eine Filtereinheit 76 und eine Auswerteeinheit 78.

Die Drehzahlbestimmungseinheit 74, der die Winkelwerte ϕi zugeführt sind, bestimmt aus den Winkelwerten ϕi die Drehfrequenz ω(t) der Welle 12. Diese ist der Filtereinheit 76 zugeführt, die als adaptiver Bandpass ausgeführt ist, dessen Durchlassfrequenz auf die Drehfrequenz ω(t) der Welle 12 einstellbar ist.
Unabhängig davon, ob es sich bei dem wenigstens einen Unwuchtsensor 20 um einen Beschleunigungssensor, einen Wegsensor, oder einen alternativen Sensor, der zur Unwuchtmessung geeignet ist, handelt, sind dem Unwuchtsignal u(t) immer Störsignale überlagert, die andere Ursachen haben als die Unwucht der Welle 12. Die Filtereinheit 76, eingestellt auf die Drehfrequenz ω(t) der Welle 12, filtert daher die ihr zugeführten Unwuchtwerte ui, die das Unwuchtsignal u(t) repräsentieren, und erzeugt eine Folge von gefilterten Unwuchtwerten wi, die wiederum ein gefiltertes Unwuchtsignal w(t) repräsentieren.

Alternativ zu einem Bandpass kann die Filtereinheit 76 auch geeignet ausgestaltet sein, um die gefilterten Unwuchtwerte wi, bzw. das gefilterte Unwuchtsignal w(t), rechnerisch zu ermitteln, beispielsweise mittels einer Fourier-Transformation, einer Fast-Fourier-Transformation (FFT), oder durch andere Signalverarbeitungsverfahren, die die Funktion eines schmalbandigen Bandpassfilters aufweisen.

Die gefilterten Unwuchtwerte wi und die Winkelwerte ϕi sind der Auswerteeinheit 78 zugeführt, die hieraus die Unwuchtinformation I generiert. Hierzu ermittelt die Auswerteeinheit 78 aus den gefilterten Unwuchtwerten wi die Amplitude des gefilterten Unwuchtsignals w(t), sowie dessen Phasenlage bezogen auf die Winkelposition der Welle 12, repräsentiert durch die Winkelwerte ϕi.

Darüber hinaus kann der Auswerteeinheit 78 noch die Drehfrequenz ω(t) zugeführt sein. Diese kann die Unwuchtinformation I ergänzen, so dass zum Auswuchten der Welle 30 des Rundtisches 32, bzw. allgemein der auszuwuchtenden Maschine, auch die Drehzahlabhängigkeit der Amplitude des Unwuchtsignals u(t) berücksichtigt werden kann.

Andererseits kann in einem sehr einfachen Fall auf die Drehzahlbestimmungseinheit 74 vollständig verzichtet werden, wenn die Ermittlung der Unwuchtinformation I stets bei der gleichen Drehzahl erfolgt. Diese kann beispielsweise von der Folgeelektronik 100 vorgegeben werden. In diesem Fall muss die Filtereinheit 76 auch nicht adaptiv ausgeführt werden, sondern kann fest auf die vorgegebene Drehzahl eingestellt sein.

Da alle Komponenten, die für die Ermittlung der Unwuchtinformation I benötigt werden, in der Winkelmesseinrichtung angeordnet sind, können noch beim Hersteller, beispielsweise im Zuge einer Kalibrierprozedur zum Abschluss des Fertigungsprozesses, Korrekturwerte ermittelt und gespeichert werden, die während des Betriebs der Winkelmesseinrichtung zur Ermittlung der Unwuchtinformation I berücksichtigt werden. Die Korrekturwerte können die Signalverarbeitung betreffen, insbesondere Signallaufzeiten, wie beispielsweise den Zeitbedarf für die Verarbeitung der Ausgangssignale des Unwuchtsensors 20 zu Unwuchtwerten, oder die Signallaufzeit in der Filtereinheit 76. Darüber hinaus können die Korrekturwerte geometrische Gegebenheiten berücksichtigen, beispielsweise die Winkelposition des wenigstens einen Unwuchtsensors 20 bezogen auf einen Referenzpunkt der Positionsmessung.

Figur 6 zeigt ein Blockschaltbild einer Signalverarbeitungseinheit 70 zur Bildung der Unwuchtinformation I aus Folgen von Unwuchtwerten ui, die ihr von der Unwuchterfassungseinheit 60 positionsgesteuert zugeführt werden. Sie umfasst eine Anforderungseinheit 175, eine Filtereinheit 176 und eine Auswerteeinheit 178.

Der Anforderungseinheit 175 werden Winkelwerte ϕ zugeführt. Hierzu erzeugt die Positionserfassungseinheit 50 Winkelwerte ϕ entweder kontinuierlich, oder, wie durch den gestrichelten Pfeil angedeutet, als Folge von Positionsanforderungsbefehlen P_RQ, die die Anforderungseinheit 175 in äquidistanten Zeitabständen an die Positionserfassungseinheit 50 schickt. Auch im letzteren Fall sind gleichmäßige Zeitabstände vorteilhaft.

Die Anforderungseinheit 175 ermittelt aus den eintreffenden Winkelwerten ϕ, beispielsweise anhand eines der oben in Verbindung mit Figur 4 beschriebenen vorteilhaften Verfahren, die Zeitpunkte, an denen denen Unwuchtwerte ui gemessen werden sollen und schickt zu diesen Zeitpunkten Unwuchtanforderungsbefehle U_RQ an die Unwuchterfassungseinheit 60 um die Messung zu initiieren.

Dieses Verfahren hat gegenüber dem vorhergehend beschriebenen Ausführungsbeispiel zwei wesentliche Vorteile:
- Durch die feste Zuordnung der Unwuchtwerte ui zu Winkelwerten ϕi ist die Phaseninformation der Unwuchtinformation I bereits in den Unwuchtwerten ui alleine enthalten.
- Dadurch, dass die Unwuchtwerte ui nicht zeit- sondern positionsabhängig ermittelt werden, sind sie auch unabhängig von der Drehfrequenz ω(t) und ggf. sogar einer Beschleunigung der Welle 12. Je Umdrehung der Welle 12 ergibt sich immer ein Datensatz von Unwuchtwerten ui, der genau einer Periode des Unwuchtsignals u(t) entspricht.

Die Unwuchtwerte ui sind wiederum der Filtereinheit 176 zugeführt, die Störsignale herausfiltert und gefilterte Unwuchtwerte wi an die Auswerteeinheit 178 ausgibt. Aus den vorgenannten Gründen muss die Filtereinheit 176 nicht adaptiv ausgeführt sein, benötigt also keine Information über die Drehfrequenz ω(t).

Die Auswerteeinheit 178 ermittelt wiederum die Unwuchtinformation I, also die Amplitude des durch die gefilterten Unwuchtwerte wi repräsentierten Unwuchtsignals w(t), sowie dessen Phasenlage bezogen auf einen Referenzpunkt der Winkelmessung.

Um die Drehzahlabhängigkeit der Amplitude des Unwuchtsignals berücksichtigen zu können, kann die Anforderungseinheit 175 die Drehfrequenz ω(t) der Welle 12 an die Auswerteeinheit 178 ausgeben, um die Unwuchtinformation I zu ergänzen.

Obwohl in den beschriebenen Ausführungsbeispielen lediglich die Verarbeitung von Unwuchtwerten ui nur eines Unwuchtsensors 20 dargestellt ist, ist es für einen Fachmann problemlos möglich, insbesondere die Signalverarbeitungseinheit 70 zur Verarbeitung von Unwuchtwerten ui mehrerer Unwuchtsensoren 20 zu ertüchtigen.

Die vorliegende Erfindung ist selbstverständlich nicht auf die beschriebenen Ausführungsformen eingeschränkt. Vielmehr können, basierend auf den offenbarten Ausführungsbeispielen, von einem Fachmann weitere Varianten entwickelt werden.

## Patentansprüche

1. Winkelmesseinrichtung, umfassend
• ein Gehäuse (10),
• eine Positionserfassungseinheit (50) zur Erzeugung von Winkelwerten (ϕ, ϕi), die die Winkelstellung einer Welle (12, 30) bezogen auf eine Referenzposition angeben,
• eine Schnittstelleneinheit (80) zur Kommunikation mit einer Folgeelektronik (100) über einen Datenübertragungskanal (82), wobei die Winkelmesseinrichtung weiter umfasst
• wenigstens einen Unwuchtsensor (20), der aus unwuchtbedingten Auslenkungen der Welle (12, 30) ein Unwuchtsignal (u(t)) generiert,
• eine Unwuchtauswerteeinheit (62), die aus dem Unwuchtsignal (u(t)) Unwuchtwerte (u, ui) generiert, sowie
• eine Signalverarbeitungseinheit (70), die aus den Winkelwerten (ϕ, ϕi) und den Unwuchtwerten (u, ui) eine Unwuchtinformation (I) generiert, die über die Schnittstelleneinheit (80) zur Folgeelektronik (100) übertragbar ist,
wobei die Positionserfassungseinheit (50) und der Unwuchtsensor (20) innerhalb des Gehäuses (10) angeordnet sind.

2. Winkelmesseinrichtung nach Anspruch 1, wobei die Welle (12) der Winkelmesseinrichtung zugeordnet ist und
• die Welle (12) im Gehäuse (10) über ein Lager (11) drehbar gelagert ist,
• der gegenüber der Welle (12) stationäre Teil des Lagers (11) über eine Kupplung (13) mechanisch weich an das Gehäuse (10) gekoppelt ist und
• die Welle (12) mit Verbindungsmitteln (33) mit einer Welle (30) einer Maschine (32) mechanisch steif koppelbar ist.

3. Winkelmesseinrichtung nach einem der Ansprüche 1 oder 2, wobei der wenigstens eine Unwuchtsensor (20) mechanisch steif an die Welle (12) gekoppelt ist.

4. Winkelmesseinrichtung nach Anspruch 3, wobei der wenigstens eine Unwuchtsensor (20) mechanisch steif mit dem stationären Teil des Lagers (11) verbunden ist.

5. Winkelmesseinrichtung nach Anspruch 4, wobei der wenigstens eine Unwuchtsensor (20) auf einer Leiterplatte (22) angeordnet ist, die am stationären Teil des Lagers (11) befestigt ist.

6. Winkelmesseinrichtung nach einem der vorhergehenden Ansprüche, wobei zwei Unwuchtsensoren (20) vorgesehen sind, deren Messrichtungen (X, Y) orthogonal zueinander in der Rotationsebene der Welle (12) liegen.

7. Winkelmesseinrichtung nach einem der vorhergehenden Ansprüche, wobei ein weiterer Unwuchtsensor (20) vorgesehen ist, dessen Messrichtung (Z) parallel zur Drehachse der Welle (12) ausgerichtet ist.

8. Winkelmesseinrichtung nach einem der vorhergehenden Ansprüche, wobei der wenigstens eine Unwuchtsensor (20) ein Beschleunigungssensor oder ein Wegsensor ist.

9. Verfahren zum Betreiben einer Winkelmesseinrichtung nach einem der Ansprüche 1 bis 8, wobei
• von der Positionserfassungseinheit (50) Winkelwerte (ϕ, ϕi) generiert werden, die die Winkelposition der Welle (12, 30) bezogen auf eine Referenzposition angeben,
• von der Unwuchterfassungseinheit (60) aus einem von dem wenigstens einen Unwuchtsensor (20) erzeugen Unwuchtsignal (u(t)) Unwuchtwerte (u, ui) generiert werden, die ein Maß für eine unwuchtbedingte Auslenkung der Welle (12, 30) sind und
• die Winkelwerte (ϕ, ϕi) und die Unwuchtwerte (u, ui) der Signalverarbeitungseinheit (70) zugeführt werden, die basierend auf den Winkelwerten (ϕ, ϕi) und den Unwuchtwerten (u, ui) die Unwuchtinformation (I) generiert, die wenigstens die Phasenlage des Unwuchtsignals (u(t)) bezogen auf die Referenzposition, sowie die Amplitude des Unwuchtsignals (u(t)) umfasst.

10. Verfahren nach Anspruch 9, wobei
• die Unwuchtwerte (u, ui) in der Signalverarbeitungseinheit (70) einer Filtereinheit (76, 176) zugeführt werden, die den Unwuchtwerten (u, ui) überlagerte Störungen ausgefiltert und gefilterte Unwuchtwerte (wi) bildet und
• die gefilterten Unwuchtwerte (wi) einer Auswerteeinheit (78, 178) zugeführt sind, die die Unwuchtinformation (I) generiert.

11. Verfahren nach Anspruch 10, wobei das Generieren der Unwuchtwerte (u, ui) zeitgesteuert erfolgt und
• die Winkelwerte (ϕ, ϕi) einer Drehzahlbestimmungseinheit (74) zugeführt sind, die aus den Winkelwerten (ϕ, ϕi) die Drehfrequenz (ω(t)) der Welle (12, 30) ermittelt,
• die Drehfrequenz (ω(t)) der Filtereinheit (76) zugeführt wird, die als adaptiver Bandpassfilter ausgeführt ist, und die Durchlassfrequenz der Filtereinheit (76) auf die Drehfrequenz (ω(t)) eingestellt wird und
• die Winkelwerte (ϕ, ϕi) der Auswerteeinheit (78) zugeführt werden.

12. Verfahren nach Anspruch 11, wobei die Drehfrequenz (ω(t)) der Welle (12, 30) ebenfalls der Auswerteeinheit (78) zugeführt wird.

13. Verfahren nach Anspruch 10, wobei das Generieren der Unwuchtwerte (u, ui) positionsgesteuert erfolgt und die Winkelwerte (ϕ, ϕi) einer Anforderungseinheit (175) zugeführt werden, die aus wenigstens zwei aufeinanderfolgenden Winkelwerten die Zeitpunkte zum Generieren von Unwuchtwerten (u, ui) ermittelt und zu den ermittelten Zeitpunkten das Generieren von Unwuchtwerten (u, ui) initiiert.

14. Verfahren nach Anspruch 13, wobei die Anforderungseinheit (175) aus wenigstens zwei aufeinanderfolgenden Winkelwerten (ϕ, ϕi) die Drehfrequenz (ω(t)) bestimmt und die Zeitpunkte zum Generieren von Unwuchtwerten (u, ui) durch Extrapolation ermittelt.

15. Verfahren nach Anspruch 14, wobei die Drehfrequenz (ω(t)) der Welle (12, 30) ebenfalls der Auswerteeinheit (178) zugeführt wird.

16. Verfahren nach einem der Ansprüche 9 bis 15, wobei die Unwuchtinformation (I) bei konstanter Drehfrequenz (ω(t)) der Welle (12, 30) ermittelt wird.

## Claims

1. Angle measuring device, comprising
• a housing (10),
• a position detection unit (50) for producing angle values (ϕ, ϕi) that specify the angular position of a shaft (12, 30) in relation to a reference position,
• an interface unit (80) for communicating with downstream electronics (100) by way of a data transfer channel (82),
wherein the angle measuring device further comprises
• at least one imbalance sensor (20) that generates an imbalance signal (u(t)) from deflections of the shaft (12, 30) caused by imbalance,
• an imbalance evaluation unit (62) that generates imbalance values (u, ui) from the imbalance signal (u(t)), and
• a signal processing unit (70) that generates an imbalance information item (I) from the angle values (ϕ, ϕi) and the imbalance values (u, ui), said imbalance information item being transferable to the downstream electronics (100) via the interface unit (80),
wherein the position detection unit (50) and the imbalance sensor (20) are arranged within the housing (10).

2. Angle measuring device according to Claim 1, wherein the shaft (12) is associated with the angle measuring device and
• the shaft (12) is rotatably mounted in the housing (12) by way of a bearing (11),
• the part of the bearing (11) that is stationary with respect to the shaft (12) is mechanically softly coupled to the housing (10) by way of a coupling (13) and
• the shaft (12) is mechanically rigidly couplable with connection means (33) to a shaft (30) of a machine (32).

3. Angle measuring device according to either of Claims 1 and 2, wherein the at least one imbalance sensor (20) is mechanically rigidly coupled to the shaft (12).

4. Angle measuring device according to Claim 3, wherein the at least one imbalance sensor (20) is mechanically rigidly connected to the stationary part of the bearing (11).

5. Angle measuring device according to Claim 4, wherein the at least one imbalance sensor (20) is arranged on a circuit board (22) that is fastened to the stationary part of the bearing (11).

6. Angle measuring device according to any one of the preceding claims, wherein two imbalance sensors (20) are provided, the measuring directions (X, Y) thereof lying orthogonal to one another in the rotational plane of the shaft (12).

7. Angle measuring device according to any one of the preceding claims, wherein a further imbalance sensor (20) is provided, the measuring direction (Z) of which is aligned parallel to the axis of rotation of the shaft (12).

8. Angle measuring device according to any one of the preceding claims, wherein the at least one imbalance sensor (20) is an acceleration sensor or a position sensor.

9. Method for operating an angle measuring device according to any one of Claims 1 to 8, wherein
• angle values (ϕ, ϕi) are generated by the position detection unit (50), said angle values specifying the angular position of the shaft (12, 30) in relation to a reference position,
• imbalance values (u, ui) are generated by the imbalance detection unit (60) from an imbalance signal (u(t)) produced by the at least one imbalance sensor (20), said imbalance values being a measure for a deflection of the shaft (12, 30) caused by imbalance, and
• the angle values (ϕ, ϕi) and the imbalance values (u, ui) are supplied to the signal processing unit (70) that generates the imbalance information item (I) on the basis of the angle values (ϕ, ϕi) and the imbalance values (u, ui), said imbalance information item comprising at least the phase angle of the imbalance signal (u(t)) in relation to the reference position and the amplitude of the imbalance signal (u(t)).

10. Method according to Claim 9, wherein
• the imbalance values (u, ui) in the signal processing unit (70) are supplied to a filter unit (76, 176) that filters out interference superposed on the imbalance values (u, ui) and that forms filtered imbalance values (wi) and
• the filtered imbalance values (wi) are supplied to an evaluation unit (78, 178) that generates the imbalance information item (I).

11. Method according to Claim 10, wherein the imbalance values (u, ui) are generated in time-controlled fashion and
• the angle values (ϕ, ϕi) are supplied to a rotational speed determination unit (74), which ascertains the rotational frequency (ω(t)) of the shaft (12, 30) from the angle values (ϕ, ϕi),
• the rotational frequency (ω(t)) is supplied to the filter unit (76), which is embodied as an adaptive bandpass filter, and the pass frequency of the filter unit (76) is set to the rotational frequency (ω(t)) and
• the angle values (ϕ, ϕi) are supplied to the evaluation unit (78).

12. Method according to Claim 11, wherein the rotational frequency (ω(t)) of the shaft (12, 30) is likewise supplied to the evaluation unit (78).

13. Method according to Claim 10, wherein the imbalance values (u, ui) are generated in position-controlled fashion and the angle values (ϕ, ϕi) are supplied to a request unit (175) that ascertains the times for generating imbalance values (u, ui) from at least two successive angle values and initiates the generation of imbalance values (u, ui) at the ascertained times.

14. Method according to Claim 13, wherein the request unit (175) determines the rotational frequency (ω(t)) from at least two successive angle values (ϕ, ϕi) and ascertains the times for generating imbalance values (u, ui) by extrapolation.

15. Method according to Claim 14, wherein the rotational frequency (ω(t))) of the shaft (12, 30) is likewise supplied to the evaluation (178).

16. Method according to any one of Claims 9 to 15, wherein the imbalance information item (I) is ascertained in the case of a constant rotational frequency (ω(t))) of the shaft (12, 30).

## Revendications

1. Dispositif de mesure d'angle, comprenant
• un boîtier (10),
• une unité de détection de position (50) destinée à générer des valeurs angulaires (ϕ, ϕi) indiquant la position angulaire d'un arbre (12, 30) par rapport à une position de référence,
• une unité d'interface (80) destinée à communiquer avec une électronique aval (100) par l'intermédiaire d'un canal de transmission de données (82),
le dispositif de mesure d'angle comprenant en outre
• au moins un capteur de balourd (20) qui génère un signal de balourd (u(t)) à partir de déviations de l'arbre (12, 30) induites par le balourd,
• une unité d'évaluation de balourd (62) qui génère des valeurs de balourd (u, ui) à partir du signal de balourd (u(t)), et
• une unité de traitement de signal (70) qui génère une information de balourd (I) à partir des valeurs angulaires (ϕ, ϕi) et des valeurs de balourd (u, ui), laquelle information peut être transmise par l'unité d'interface (80) à l'électronique aval (100),
dans lequel l'unité de détection de position (50) et le capteur de balourd (20) sont disposés à l'intérieur du boîtier (10) .

2. Dispositif de mesure d'angle selon la revendication 1,
dans lequel l'arbre (12) est associé au dispositif de mesure d'angle et
• l'arbre (12) est monté tournant dans le boîtier (10) par l'intermédiaire d'un palier (11),
• la partie du palier (11) qui est stationnaire par rapport à l'arbre (12) est couplée mécaniquement de manière non rigide au boîtier (10) par l'intermédiaire d'un embrayage (13), et
• l'arbre (12) peut être couplé mécaniquement de manière rigide par des moyens de liaison (33) à un arbre (30) d'une machine (32).

3. Dispositif de mesure d'angle selon l'une des revendications 1 ou 2, dans lequel l'au moins un capteur de balourd (20) est couplé mécaniquement de manière rigide à l'arbre (12).

4. Dispositif de mesure d'angle selon la revendication 3, dans lequel l'au moins un capteur de balourd (20) est relié mécaniquement de manière rigide à la partie stationnaire du palier (11).

5. Dispositif de mesure d'angle selon la revendication 4, dans lequel l'au moins un capteur de balourd (20) est disposé sur une carte de circuit imprimé (22) qui est fixée à la partie stationnaire du palier (11) .

6. Dispositif de mesure d'angle selon l'une des revendications précédentes, dans lequel il est prévu deux capteurs de balourd (20) dont les directions de mesure (X, Y) sont orthogonales entre elles dans le plan de rotation de l'arbre (12).

7. Dispositif de mesure d'angle selon l'une des revendications précédentes, dans lequel il est prévu un autre capteur de balourd (20) dont la direction de mesure (Z) est orientée parallèlement à l'axe de rotation de l'arbre (12).

8. Dispositif de mesure d'angle selon l'une des revendications précédentes, dans lequel l'au moins un capteur de balourd (20) est un capteur d'accélération ou un capteur de déplacement.

9. Procédé pour faire fonctionner un dispositif de mesure d'angle selon l'une des revendications 1 à 8, dans lequel
• des valeurs angulaires (ϕ, ϕi) indiquant la position angulaire de l'arbre (12, 30) par rapport à une position de référence sont générées par l'unité de détection de position (50),
• des valeurs de balourd (u, ui) sont générées par l'unité de détection de balourd (60) à partir d'un signal de balourd (u(t)) produit par l'au moins un capteur de balourd (20), lesquelles sont une mesure d'une déviation de l'arbre (12, 30) induite par le balourd, et
• les valeurs angulaires (ϕ, ϕi) et les valeurs de balourd (u, ui) sont envoyées à l'unité de traitement de signal (70) qui génère l'information de balourd (I) sur la base des valeurs angulaires (ϕ, ϕi) et des valeurs de balourd (u, ui), laquelle information comprend au moins la position de phase du signal de balourd (u(t)) par rapport à la position de référence, ainsi que l'amplitude du signal de balourd (u(t)).

10. Procédé selon la revendication 9, dans lequel
• es valeurs de balourd (u, ui) sont envoyées, dans l'unité de traitement de signal (70), à une unité de filtrage (76, 176) qui filtre des perturbations superposées aux valeurs de balourd (u, ui) et obtient des valeurs de balourd filtrées (wi) et
• les valeurs de balourd filtrées (wi) sont envoyées à une unité d'évaluation (78, 178) qui génère l'information de balourd (I).

11. Procédé selon la revendication 10, dans lequel la génération des valeurs de balourd (u, ui) est effectuée de manière commandée dans le temps, et
• les valeurs angulaires (ϕ, ϕi) sont envoyées à une unité de détermination de vitesse de rotation (74) qui détermine la fréquence de rotation (w(t)) de l'arbre (12, 30) à partir des valeurs angulaires (ϕ, ϕi),
• la fréquence de rotation (w(t)) est envoyée à l'unité de filtrage (76), qui est réalisée sous la forme d'un filtre passe-bande adaptatif, et la fréquence passe-bande de l'unité de filtrage (76) est réglée à la fréquence de rotation (w(t)) et
• les valeurs angulaires (ϕ, ϕi) sont envoyées à l'unité d'évaluation (78).

12. Procédé selon la revendication 11, dans lequel la fréquence de rotation (w(t)) de l'arbre (12, 30) est également envoyée à l'unité d'évaluation (78).

13. Procédé selon la revendication 10, dans lequel la génération des valeurs de balourd (u, ui) est effectuée de manière commandée en position et les valeurs angulaires (ϕ, ϕi) sont envoyées à une unité de demande (175) qui détermine les instants où des valeurs de balourd (u, ui) doivent être générées à partir d'au moins deux valeurs angulaires successives et déclenche la génération de valeurs de balourd (u, ui) aux instants déterminés.

14. Procédé selon la revendication 13, dans lequel l'unité de demande (175) détermine la fréquence de rotation (w(t)) à partir d'au moins deux valeurs angulaires (ϕ, ϕi) successives et détermine par extrapolation les instants où les valeurs de balourd (u, ui) doivent être générées.

15. Procédé selon la revendication 14, dans lequel la fréquence de rotation (w(t)) de l'arbre (12, 30) est également envoyée à l'unité d'évaluation (178).

16. Procédé selon l'une des revendications 9 à 15, dans lequel l'information de balourd (I) est déterminée pour une fréquence de rotation (w(t)) constante de l'arbre (12, 30).
